# EUROPEAN PATENT APPLICATION

(11) **EP 3 358 702 A1**
(43) Date of publication of application: **08.08.2018**
(21) Application number: 18154763.9
(22) Date of filing: 01.02.2018
(51) Int. Cl.: H02J 7/00, H02J 7/35

(54) **A PHOTOVOLTAIC POWERED CHARGING STATION FOR SIMULTANEOUSLY CHARGING A PLURALITY OF PORTABLE ELECTRONIC DEVICES**

(30) Priority: 03.02.2017 GB 201701831
(71) Applicant: Solar Dock Limited, Buckinghamshire HP13 6HN (GB)
(72) Inventor: Scott, Simon, Buckinghamshire, HP13 5UB (GB)
(74) Representative: Cameron, Stewart

(57) **Abstract**

The invention relates to a photovoltaic (PV) powered charging station for charging a plurality of portable electronic devices. The PV powered charging station includes a main battery arrangement which may be charged by a source of electrical power, a charge distribution module having connection jacks for connecting electrical devices thereto for charging, and a PV cell for supplying electrical power to the main battery arrangement. Th invention allows the main battery to be at least partially charged by electrical energy generated by the PV cell when light energy is incident on the PV cell.

## Description

The present invention relates to a photovoltaic powered charging station, particularly, but not exclusively, a photovoltaic powered charging station for charging multiple electronic devices such as smart phones, digital cameras, tablet computers, smart watches, fitness trackers and other wearable / rechargeable technology etc.

Such electronic devices of the sort mentioned above have become ubiquitous in recent years and are typically powered by on-board batteries which periodically require charging. This is typically achieved by connecting the device to a mains-powered charging adapter. However, this can mean that a user must retain several different charging adapters which themselves must be plugged into several different mains electrical plug sockets. As well as being cumbersome, this is sub optimal from an environmental perspective since each of the devices being charged require electrical energy often ultimately derived from fossil or nuclear fuels. Furthermore, although such devices are normally relatively low powered and hence charging one device typically creates a relatively negligible environmental impact, collectively the repeated charging of so many devices creates a significant environmental impact due to the large quantity being charged on a worldwide basis.

According to a first aspect of the present invention there is provided a photovoltaic powered charging station for charging a plurality of portable electronic devices, the photovoltaic powered charging station comprising:-
at least a main battery arrangement which may be charged by a source of electrical power;
at least a charge distribution module having connection jacks for connecting a plurality of electrical devices thereto for charging thereof;
and at least a photovoltaic cell for supplying at least a portion of the source of electrical power to the main battery arrangement such that the main battery arrangement may be at least partially charged by electrical energy generated by the photovoltaic cell when light energy is incident on the photovoltaic cell.

The charge distribution module may be adapted to control and facilitate simultaneous charging of a plurality of different rechargeable electronic devices having a plurality of different power and current demands. A plurality of connection jack adapters may be provided to allow different devices with different charge connection jacks to be connected to and charged by the charge distribution module.

The charging station may also be provided with a mains connection allowing the main battery arrangement to be charged by mains electrical energy in addition to, or instead of electrical energy derived from said photovoltaic cell.

A charge controller may also be provided in order to control and coordinate charging of the main battery by way of mains electrical energy and / or electrical energy derived from said photovoltaic cell.

A primary expansion battery may be provided between the main battery and the charge distribution module in order to increase the capacity of the charging station to hold electrical energy.

A secondary or further plurality of expansion batteries may be provided between the main battery and the charge distribution module in order to further increase the capacity of the charging station to hold electrical energy.

At least a primary expansion battery controller may be provided in order to control and coordinate charging of the main battery, the primary expansion battery, the secondary expansion battery and / or powering of the charge distribution module. Preferably, a secondary expansion battery controller is also provided.

The charge controller and / or primary expansion and / or secondary expansion battery controllers may be provided with a maximum power point tracking circuit adapted to allow the main, primary or secondary batteries to be charged at maximum efficiency. The charging station may also comprise a primary portable battery pack capable of being selectively charged by the charge distribution module in addition to or instead of said electrical devices. Optionally, a second or plurality of portable battery packs are provided.

The main battery, primary expansion battery and / or secondary expansion batteries may be provided with a battery charge status indicator display. The battery charge status indicator display may comprise an OLED display.

The components of the charging station may be installed inside the main structure of a building whereas the photovoltaic cell may be provided outside of the main building structure.

The charging station may comprise a plurality of photovoltaic cells arranged in a solar array.

The charging station may also comprise a digital radio module and wireless connectivity module.

Further features and advantages of the present invention will become apparent from the claims and the following description.

Embodiments of the present invention will now be described by way of example only, with reference to the following diagrams, in which:-
Fig. 1 is a schematic illustration of a photovoltaic powered charging station showing an internal layout of components according to the present invention;
Fig. 2 is a schematic perspective external illustration of a charging station according to a first embodiment of the invention;
Fig. 3 is a schematic perspective external illustration of a charging station according to a second embodiment of the invention;
Fig. 4 is a schematic plan view illustration of the charging station illustrated in Fig. 3;
Fig. 5 is a schematic rear view illustration of the charging station illustrated in Fig. 3; and
Fig. 6 is an upper schematic perspective illustration of the charging station where a lid is provided.

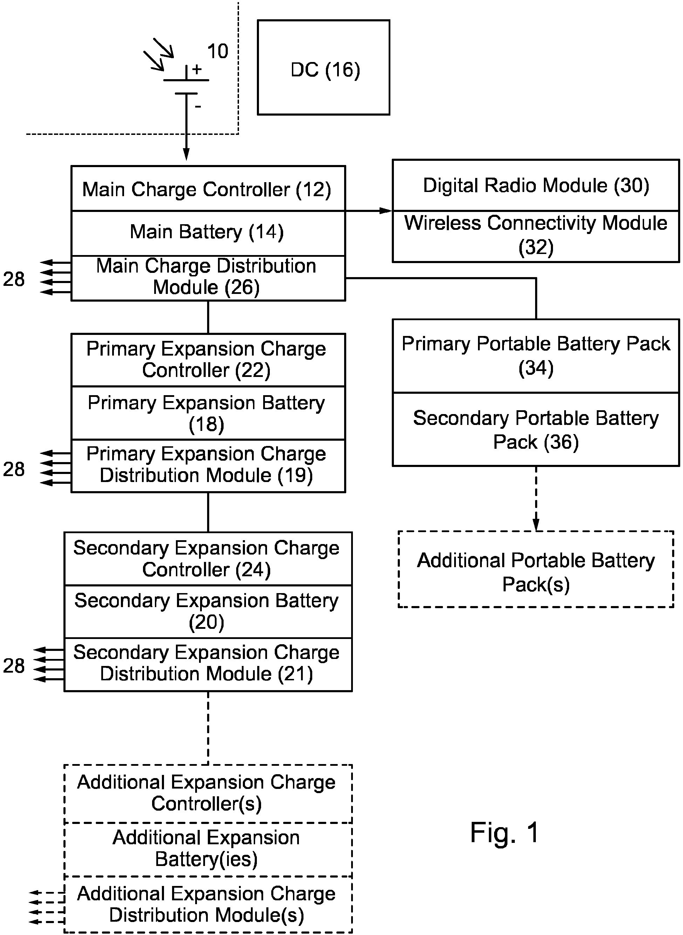

With reference to Fig. 1, the charging system comprises a photovoltaic (PV) cell 10 which is mounted on the exterior of a building and which connects to a main charge controller 12 and main battery arrangement 14. The main battery arrangement 14 may comprise any suitable rechargeable battery pack such as e.g. a lithium-ion or lithium iron phosphate (LiFePO4) battery pack. A mains DC input 16 also connects to the main charge controller 12 and main battery arrangement 14 such that electrical power may be supplied to the main battery 14 from either the PV cell 10 or the DC input 16 depending upon which is selected by the main charge controller logic. Alternatively, a manual switch may be provided in order to allow the user to manually select whether the main battery 14 is charged by the PV cell 10 or the DC input 16.

The PV cell 10 may include several PV cells connected together in a solar array / panel configuration. Any form of PV cell suitable for the purpose may be utilised; however a particularly suitable format may be a monocrystalline PV or polycrystalline PV cell / panel. A typical desired output of the solar array / panel configuration would provide around 200W of electrical power output to the main battery 14.

Connected to the main battery 14 are parallel primary and secondary expansion batteries 18, 20 and associated controllers 22, 24. Like the main battery 14 the primary and secondary expansion batteries 18, 20 comprise any suitable rechargeable battery such as e.g. a lithium-ion or lithium iron phosphate battery (LiFePO4). As illustrated in Fig. 1, several further additional expansion batteries and associated controllers can also be connected if desired in order to increase the capacity of the system. This in turn increases the number of devices that can be charged by the system. With each additional battery and controller placed in series with the existing main battery 14, the photovoltaic array may be increased in size / charging capacity in order to ensure additional electrical energy is available to charge the increased combined battery capacity. Alternatively, the expansion batteries may be omitted entirely from the apparatus.

A main charge distribution module 26 which has a plurality of charging outputs 28 is also connected to the main battery 14. The distribution module 26 controls simultaneous charging of several electronic devices (not shown) connected to the outputs 28. A plurality of connection jack adapters may be provided to allow the outputs 28 to connect to a plurality of different, non-standardised format charging inputs of the type found on different electronic devices. Intelligent universal serial bus (USB) connections may be provided in order to provide "intelligent" charge functions to any connected device. A digital radio module 30 and wireless connectivity module 32 (such as a wi-fi "hotspot" module) may also be provided. The digital radio module allows digital radio to be played through either an on-board speaker and / or through a wirelessly connected speaker. The wireless connectivity module 32 allows the system to communicate with a local router such that the performance of the module may be monitored and managed and to present as a "hotspot" or other connectivity option for wireless connectivity. This may be facilitated by way of software in the form of e.g. a smartphone app, website or via a secure cloud-based system.

Each of the primary and secondary expansion batteries 18, 20 are also provided with associated expansion charge distribution modules 19, 21 in order to allow multiple devices to be charged by each expansion battery. In this way each additional expansion battery is capable of charging (in the specific example) four more electronic devices hence allowing the capacity of the product to be expanded in series with each additional expansion battery.

Primary and secondary portable battery packs 34, 36 are also provided. Like the main battery 14 and primary / secondary expansion batteries 18, 20, the primary and secondary portable battery packs 34, 36 comprise any suitable rechargeable battery such as e.g. a Lithium-ion or lithium iron phosphate battery (LiFePO4). The portable battery packs 34, 36 may be electrically connected to the main battery in series by wires or by way of a gravity-assisted cradle docking system. As illustrated in Fig. 1, several further additional portable batteries can also be connected if desired.

A display such as a backlit LCD or Organic Light-Emitting Diode (OLED) display (not shown) may be provided in order to allow the user to control the system and for the system to display information on the system / battery status / options etc. to the user.

The system may also be provided with the ability to transfer cost savings / other charging data to the internet or computer cloud-based servers for processing thereof.

The outputs 28 may be Universal Serial Bus (USB) ports whose power supply is controlled by a microprocessor controlled board which communicates with a Maximum Power Point Tracking board in order to provide information on the charge state etc.

In one embodiment, four USB "type A" connectors are present and each one is current limited by an intelligent switch device connected to the main processor. Circuitry is present on the USB D+/D- lines in order to emulate a battery charger capable of charging at a rate of up to 2.5A at 5V. On board electronics give priority to USB number 1 and 2, allocating them full power whilst allocating USB number 3 and 4 approximately 500 mA. Once any current draw from USB number 1 and 2 falls then USB number 3 and 4 are then allocated full charging power. In the scenario where only one device is connected on any USB port then that device will be allocated full charging power.

When charging from a mains source the system is arranged so as to extract the maximum current available from the power source. Charging from the USB connector will be at 500 mA (Standard powered output from USB). When connected to the main unit the main internal battery 14 will be charged while solar power / DC power is available. It will supply power to the port 28 if required.

The primary portable battery pack 34, is controlled by a microcontroller which monitors voltage and charge current and which also controls the OLED display(s).

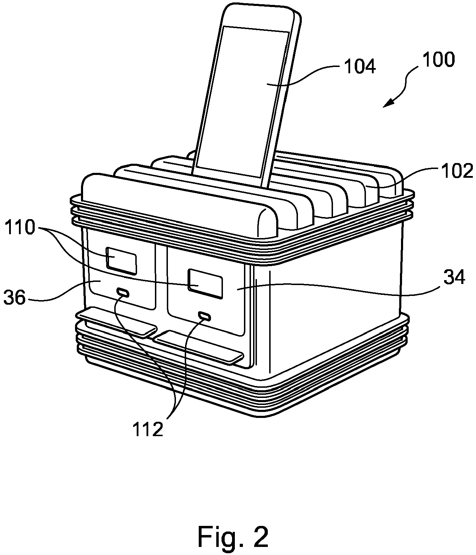

With reference to Fig. 2, the components of the apparatus shown in Fig. 1 may be encapsulated within a solar docking station 100. The docking station 100 is provided with a rack of docking shelves 102 within which several mobile devices may rest and electrically connect either by way of a connector or by induction charging (only one mobile device is illustrated in Fig. 2). The station 100 comprises a main body which houses a main battery (not shown) and two auxiliary battery packs 34 and 36 which can be reciprocated into and out of engagement with correspondingly shaped slots in the main body of the station 100. The facia of each battery pack 34, 36 is provided with an OLED display 110 and a USB outlet charging port 112.

In preparation for use, a user first positions the PV cell 10 externally on a building (ideally in a location where there is an abundance of natural daylight / sunshine) and positions the remainder of the system (including the station 100) within the building (a wire is run between the external PV cell 10 and the remainder of the (internally positioned) system. If desired or required (e.g. for night time charging / fast charging / charging in low lights levels etc.) a mains DC adapter can be used to provide a DC source 16 to the main battery 14 of the station 100 in addition to any electrical charge derived from the PV cell 10. The user then connects any electronic devices they wish to charge to the outputs 28 / slots 102.

In use, when light is incident upon the PV cell 10 electricity is generated and the main battery 14 begins to charge along with the primary / secondary expansion batteries 34, 36. The load on the PV cell 10 may be varied dynamically by the controller in order to ensure that maximum power transfer is achieved at all times. Any surplus electrical energy available from the PV cell 10 will also be routed by the charge controller 12 to the charge distribution module 26 in order to charge any electronic devices connected to the charging outputs 28 / 112 and to the primary and secondary portable battery packs 34, 36. Whilst performing this charging and distribution operation, the load required by any electronic devices connected to the outlets 28 will be analysed in order to ensure optimal charging and to prevent overcharging. The user is able to operate the digital radio module 30 and wireless connectivity module 32 during said charging.

Read out displays 110 may be blank for the majority of the operation; however, when sufficient solar power is available it will typically display the time and date, state-of-charge and charge rate. When the unit is discharging (i.e. when devices are connected via the slots 102 / USB ports 112 / other connectors and are taking a charge) the display will show a variety of items of information including e.g., current draw, total power available in the main battery, status / wake-up button etc.

The displays 110 may automatically shut-off after a predetermined amount of time in order to save power.

The processor on the circuit board may record information on e.g. battery capacity and current charge / discharge and this information may be recalled to the displays 110.

This arrangement therefore allows several electronic devices to be charged by electrical power derived primarily from a PV cell(s). Furthermore, the primary and secondary portable battery packs 34, 36 are also so charged. The primary and secondary battery packs 34, 36 are also kept topped up in a fully charged or near fully charged state meaning that the user can whenever required remove a portable battery pack 34, 36 from the system for remote powering / charging of another electronic device when distant from the charging system (e.g. when travelling etc.).

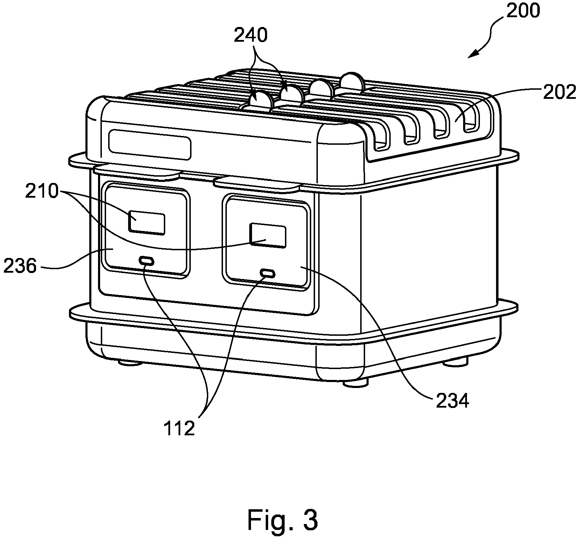

With reference to Figs. 3 to 5, a further aspect of the present invention will now be described. In order to minimise repetition, similar features of the apparatus described subsequently are numbered with a common two-digit reference numeral and are differentiated by a third digit placed before the two common digits. Such features are structured similarly, operate similarly, and/or have similar functions as previously described unless otherwise indicated.

With reference to Fig. 3 a solar docking station 200 according to a second embodiment of the invention is provided. The docking station 200 is provided with a rack of docking shelves 202 within which several mobile devices may rest and electrically connect either by way of a connector or by induction charging. The station 200 comprises a main body which houses a main battery (not shown) and two auxiliary battery packs 234 and 236 which can be reciprocated into and out of engagement with correspondingly shaped slots in the main body of the station 200. The facia of each battery pack 234, 236 is provided with an OLED display 210 and a USB outlet charging port 212.

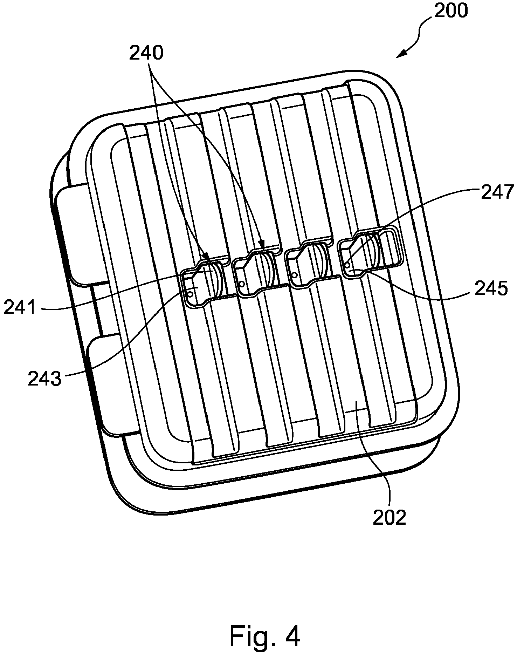

Each of the of the shelves 202 is provided with a retrieval tab 240. With particular reference to Fig. 4, each tab 240 comprises an upper handle 241 which allows a user to grasp the tab (typically between thumb and forefinger), a neck portion 243 which extends downwardly into the slots provided between each shelf 202 and a foot 245 provided at the lower end of the neck portion 243. The foot 245 of each retrieval tab 240 is provided with a cable receiving aperture 247 which locates a cable or charging connector therein. In use, when a user wishes to place a device into the slots between the shelves 202 of the charging station for charging, he will first pull a retrieval tab 240 upwards by way of its associated handle portion 241. This in turn will lift the foot 245 which will typically have a charging connector provided therein (the type of connector may be preselected and preinstalled by the user depending upon what devices they desire to charge). This then allows the user to easily connect the device to the charging connector. The user then lowers the retrieval tab 240 back into the slots between the shelf. When the user then wishes to remove the device and cease charging, he simply lifts the device (which is now cradled by the neck and foot of the retrieval tab 240) by way of the retravel tab to facilitate disconnecting. In this way, the retrieval tabs 240 allow for easy connection and disconnection of electronic devices to and from the station. The apertures 247 in each tab 240 also serve to neatly retain any cable connected to each associated charging connector within the body of charging station below each tab 240.

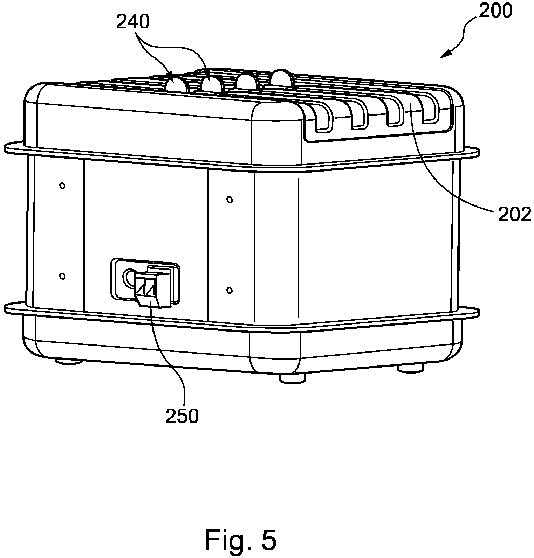

With reference to Fig. 5, a power supply connection 250 is provided at the rear of the station 200 in order to allow connection of the aforementioned solar cells and / or mains power thereto.

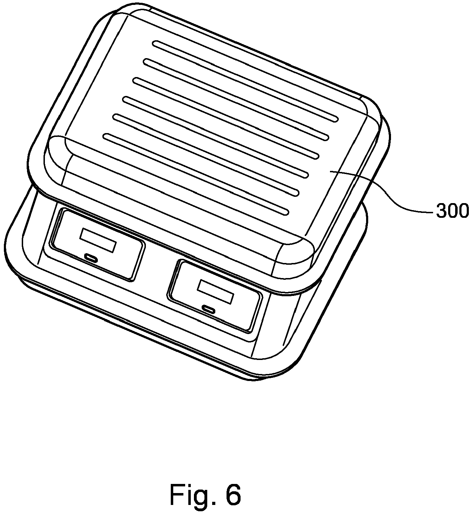

With reference to Fig. 6 the upper portion of the station may be provided with an optional lid 300 which provides a relatively continuous (as opposed to shelved) surface. This lid surface allows users to place devices thereon in a flat configuration for charging as opposed to stacking them into the shelves as previously described. This lid also protects the upper part of the charging station during storage and transportation..

Although particular embodiments of the invention have been disclosed herein in detail, this has been done by way of example and for the purposes of illustration only. The aforementioned embodiments are not intended to be limiting with respect to the scope of the statements of invention.

It is contemplated by the inventors that various substitutions, alterations, and modifications may be made to the invention without departing from the spirit and scope of the invention as defined by the statements of invention. Examples of these include the following:-

Alternative battery formats may be utilised for the main battery 14, primary / secondary expansion batteries 18, 20 and primary/ secondary portable batteries 34, 36.

Rather than having their own dedicated connection, the primary and / or secondary portable batteries 34, 36 may be attached to the charging outputs 28 when charging is required.

The PV cell 10 may be mounted in an interior (for example beneath a skylight / other light source) rather than exterior area of a building so long as said interior area is subjected to a sufficient quantity of light energy.

## Claims

1. A photovoltaic powered charging station for charging a plurality of portable
electronic devices, the photovoltaic powered charging station comprising:-
at least a main battery arrangement which may be charged by a source of electrical power;
at least a charge distribution module having connection jacks for connecting a plurality of electrical devices thereto for charging thereof;
and at least a photovoltaic cell for supplying at least a portion of the source of electrical power to the main battery arrangement such that the main battery arrangement may be at least partially charged by electrical energy generated by the photovoltaic cell when light energy is incident on the photovoltaic cell.

2. A photovoltaic powered charging station according to claim 1, wherein the charge distribution module is adapted to control and facilitate simultaneous charging of a plurality of different rechargeable electronic devices having a plurality of different power and current demands.

3. A photovoltaic powered charging station according to claim 2, wherein a plurality of connection jack adapters are provided to allow different devices with different charge connection jacks to be connected to and charged by the charge distribution module.

4. A photovoltaic powered charging station according to claim 3, further comprising a mains connection allowing the main battery arrangement to be charged by mains electrical energy in addition to, or instead of electrical energy derived from said photovoltaic cell.

5. A photovoltaic powered charging station according to any preceding claim, further comprising a charge controller in order to control and coordinate charging of the main battery by way of mains electrical energy and / or electrical energy derived from said photovoltaic cell.

6. A photovoltaic powered charging station according to any preceding claim, further comprising a primary expansion battery provided between the main battery and the charge distribution module in order to increase the capacity of the charging station to hold electrical energy.

7. A photovoltaic powered charging station according to claim 6, further comprising a secondary and or further plurality of expansion batteries provided between the main battery and the charge distribution module in order to further increase the capacity of the charging station to hold electrical energy.

8. A photovoltaic powered charging station according to claim 7, further comprising at least a primary expansion battery controller in order to control and coordinate charging of the main battery, the primary expansion battery, the secondary expansion battery and / or powering of the charge distribution module.

9. A photovoltaic powered charging station according to claim 8, further comprising a secondary expansion battery controller.

10. A photovoltaic powered charging station according to claim 9, wherein the charge controller and / or primary expansion and / or secondary expansion battery controllers comprise a maximum power point tracking circuit adapted to allow the main, primary or secondary batteries to be charged at maximum efficiency.

11. A photovoltaic powered charging station according to any preceding claim, further comprising a primary portable battery pack capable of being selectively charged by the charge distribution module in addition to or instead of said electrical devices.

12. A photovoltaic powered charging station according to any preceding claim, wherein a second or plurality of portable battery packs are also provided.

13. A photovoltaic powered charging station according to any preceding claim, wherein the components of the charging station are installed inside the main structure of a building whereas the photovoltaic cell is provided outside of said main building structure.

14. A photovoltaic powered charging station according to any preceding claim, wherein an upper stacking arrangement having a plurality of recessed slots therein is provided in order to receive a plurality of devices for charging within the recessed slots and wherein the stacking arrangement is provided with at least a retrieval tab adapted to selectively reciprocate into and out of said recessed slots in order to facilitate connection and disconnection of the said devices with any associated charging cables.

15. A photovoltaic powered charging station according to claim 14, wherein the or each retrieval tab comprises a handle, neck and foot portion and wherein the foot portion is provided with an aperture adapted to retain a cabled charging connector therein.
